# EUROPEAN PATENT APPLICATION

(11) **EP 4 442 179 A1**
(43) Date of publication of application: **09.10.2024**
(21) Application number: 22902709.9
(22) Date of filing: 29.04.2022
(51) Int. Cl.: A47J 43/07, A47J 43/046

(54) **MILK DISCHARGE VALVE DEVICE, PROCESSING CUP ASSEMBLY, AND FOOD PROCESSOR**

(30) Priority: 09.12.2021 CN 202111504529
(71) Applicant: Guangdong Midea Consumer Electric Manufacturing Co., Ltd., Foshan, Guangdong 528311 (CN)
(72) Inventor: SUN, Yi, Foshan, Guangdong 528311 (CN); HUANG, Bing, Foshan, Guangdong 528311 (CN); TANG, Yan, Foshan, Guangdong 528311 (CN); GUO, Houcai, Foshan, Guangdong 528311 (CN)
(74) Representative: RGTH
(86) International application number: PCT/CN2022/090483
(87) International publication number: WO 2023/103269

(57) **Abstract**

Disclosed are a slurry valve device (1), a processing cup assembly (4), and a food processor (9). The food processor (9) is provided with a discharge port (301). The slurry valve device (1) includes: a discharge pipe assembly (20) and an extrusion mechanism (50). The discharge pipe assembly (20) is installed on the valve seat (10). The discharge pipe assembly (20) includes a discharge pipe (30). The discharge pipe (30) includes a first pipe section (30a) and a second pipe section (30b) communicated with each other. The first discharge pipe section (30a) is used to dock with the discharge port (301). A central axis of the first pipe section (30a) extends in a radial direction of the food processor (9). The central axis of the second pipe section (30b) extends downwards in an axial direction of the food processor (9), and the central axis of the second pipe section (30b) is provided at an angle to the central axis of the first pipe section (30a). The extrusion mechanism (50) is provided on the valve seat (10). The extrusion mechanism (50) acts on the outside of the first pipe section (30a) or the second pipe section (30b) and is used to control the conducting and closing of the discharge pipe (30).

## Description

This application claims priority to Chinese patent application No. 202111504529.3 filed on December 9, 2021, the entire contents of which are incorporated herein by reference.

### TECHNICAL FIELD

The present application relates to the technical field of household electrical appliances, and in particular to a slurry valve device, a processing cup assembly using the slurry valve device, and a food processor using the processing cup assembly.

### BACKGROUND

With the improvement of quality of life, food processors such as high-speed blenders and soybean milk makers are becoming increasingly popular in people's lives. These food processors can not only grind nuts into fine ingredients but also blend various fruit and vegetable juices, boil, brew tea, and perform multiple functions, bringing convenience to people's lives.

Food processors usually have a slurry valve device that provides a slurry discharge function for ease of use. However, in the related art, the slurry valve device of the food processor typically comprises a valve core designed to extend into the slurry pipeline. The valve core controls the opening and closing of the slurry pipeline through its movement within the slurry pipeline. This design, during long-term use, tends to cause food ingredients to remain at the valve core due to the prolonged passage of food liquids through the slurry pipeline. Over time, the retained food ingredients can easily mold and deteriorate, posing a food safety risk for subsequent food processing.

### SUMMARY

### TECHNICAL PROBLEM

The main purpose of the present application is to provide a slurry valve device, aiming at improving the safety performance of a food processor during the food preparation process.

### TECHNICAL SOLUTION

To achieve the above-mentioned purpose, the present application provides a slurry valve device, applied to a food processor provided with a discharge port, comprising: a valve seat to install the slurry valve device on the food processor; a discharge pipe assembly installed on the valve seat; and an extrusion mechanism provided on the valve seat.

In an embodiment, the discharge pipe assembly comprises a discharge pipe, and the discharge pipe comprises a first pipe section and a second pipe section communicated with each other.

In an embodiment, the first pipe section is docked with the discharge port, a central axis of the first pipe section is extending in a radial direction of the food processor, a central axis of the second pipe section is extending downward in an axial direction of the food processor, and the central axis of the second pipe section is provided at an angle to the central axis of the first pipe section.

In an embodiment, the extrusion mechanism acts on an outside of the first pipe section or acts an outside of the second pipe section, controlling a conducting and closing of the discharge pipe.

In an embodiment, the extrusion mechanism comprises a drive assembly and an extrusion piece, the drive assembly drives the extrusion piece to perform linear motion, to approach and act on the outside of the first pipe section to close the discharge pipe, or to move away from the first pipe section to conduct the discharge pipe.

In an embodiment, an angle formed by the central axis of the first pipe section and the radial direction of the food processor is less than or equal to 45 degrees, and an angle formed by a movement axis of the extrusion piece and the central axis of the first pipe section ranges from 10 degrees to 90 degrees.

In an embodiment, the drive assembly comprises a drive motor and a drive screw rod, the drive motor is fixedly connected to the valve seat, and the drive screw rod is fixedly connected to a motor shaft of the drive motor.

In an embodiment, the extrusion piece is formed with a thread groove, the drive screw rod is extending into the thread groove and is threadedly engaged with the thread groove, the valve seat is formed with a guide hole extending to the discharge pipe assembly, and the extrusion piece is sliding linearly along the guide hole under a drive of the drive screw rod.

In an embodiment, a limiting piece is fixed on the motor shaft of the drive motor, a stopper is formed on the valve seat; when the extrusion piece moves to a position closing the discharge pipe, the limiting piece is blocked by one side of the stopper; and when the extrusion piece moves to a position conducting the discharge pipe, the limiting piece is blocked by another side of the stopper.

In an embodiment, the discharge pipe assembly comprises an installation seat, the discharge pipe is mounted on the installation seat, the installation seat is provided with an avoidance groove corresponding to the extrusion piece, and the extrusion piece and a groove wall of the avoidance groove are cooperated to clamp the discharge pipe.

In an embodiment, the valve seat is formed with an installation groove, and the installation seat is slidably inserted into the installation groove.

In an embodiment, a guide structure is formed between a groove wall of the installation groove and an outer wall of the installation seat.

In an embodiment, a lock structure is further provided between the valve seat and the installation seat.

In an embodiment, the lock structure comprises a lock assembly mounted on the installation seat and a buckle groove provided on the valve seat, and the lock assembly and the buckle groove can be separated.

In an embodiment, a position detection structure is further provided between the valve seat and the installation seat
In an embodiment, the discharge pipe is detachably connected to the installation seat.

In an embodiment, the installation seat is formed with a compression piece in a cylindrical structure, the first pipe section comprises a joint part connected to the discharge port, and the joint part is sleeved on the compression piece.

In an embodiment, the compression piece is further formed with a pressing ramp, and when the extrusion piece is squeezing the first pipe section to close the discharge pipe, and the extrusion piece is contacting the pressing ramp and driving the joint part to move toward the discharge port.

In an embodiment, the discharge pipe assembly comprises the installation seat, and the discharge pipe is mounted on the installation seat.

In an embodiment, the valve seat is formed with the installation groove, the installation seat is slidably inserted into the installation groove, the guide structure is formed between the groove wall of the installation groove and the outer wall of the installation seat, and the guide structure comprising a guide rail and a guide groove formed between the groove wall of the installation groove and the outer wall of the installation seat, and the guide rail is inserted into the guide groove.

In an embodiment, the lock structure is further provided between the valve seat and the installation seat.

In an embodiment, the position detection structure is further provided between the valve seat and the installation seat.

In an embodiment, the extrusion mechanism comprises the drive assembly and the extrusion piece, the drive assembly is driving the extrusion piece to perform linear motion to approach and act on the outside of the first pipe section or the second pipe section to close the discharge pipe or to move away from the outside of the first pipe section or the second pipe section to conduct the discharge pipe; the drive assembly comprises the drive motor and the drive screw rod, the drive motor is fixedly connected to the valve seat, the drive screw rod is fixedly connected to the motor shaft of the drive motor, the extrusion piece is formed with the thread groove, the drive screw rod is extending into the thread groove and is threadedly engaged, the valve seat is formed with the guide hole extending to the discharge pipe assembly, and the extrusion piece is sliding linearly along the guide hole under the drive of the drive screw rod.

In an embodiment, the limiting piece is further fixed on the motor shaft of the drive motor, the stopper is formed on the valve seat, when the extrusion piece moves to the position to close the discharge pipe, the limiting piece is blocked by one side of the stopper, and when the extrusion piece moving to the position to conduct the discharge pipe, the limiting piece is blocked by another side of the stopper.

In an embodiment, the installation seat is provided with the avoidance groove corresponding to the extrusion piece, the extrusion piece and the groove wall of the avoidance groove are cooperated to clamp the discharge pipe.

In an embodiment, the installation seat is further provided with the compression piece in the cylindrical structure, the first pipe section comprises the joint part sleeved and matched with the compression piece, and the joint part is sleeved on the compression piece.

The present application further provides a processing cup assembly, comprising a cup body provided with a discharge port, and an above slurry valve device.

In an embodiment, the slurry valve device is connected to the cup body, and the discharge pipe is connected to the discharge port.

In an embodiment, an outer wall of the cup body is further connected to an interface pipe communicated with the discharge port, and the discharge pipe is communicated with the interface pipe in a sleeve manner.

The present application further provides a food processor, comprising a machine and a processing cup assembly mounted on the machine, the processing cup assembly is the above-mentioned processing cup assembly, a drive piece being provided on the machine, and the drive piece is in transmission connection with a processing actuator.

### TECHNICAL EFFECT

The technical solution of the present application is to provide an extrusion mechanism in the slurry valve device, provide the discharge pipe as a first pipe section and a second pipe section, and directly act on the outside of the first pipe section through the extrusion mechanism to close or conduct the discharge pipe. With this design, the entire process of opening and closing the discharge pipe is smooth and reliable, and since the extrusion mechanism does not enter the discharge pipe, during use, fluid food is not easy to be retained at the valve core, avoiding long-term use causing the retained food to mold and deteriorate, and affecting subsequent food production, which improves the food safety performance of the food processor. The discharge pipe is provided as a first pipe section and a second pipe section, and the second pipe section extends downwardly at an angle, which is conducive to the outward discharge of fluid food and is more convenient to use.

### BRIEF DESCRIPTION OF THE DRAWINGS

In order to more clearly illustrate the technical solutions in the embodiments of the present application or the prior art, the following briefly introduces the drawings required for use in the embodiments or the prior art description. Obviously, the drawings described below are only some embodiments of the present application. For those skilled in the art, other drawings can also be obtained based on the structures shown in these drawings without paying creative work.
FIG. 1 is a schematic cross-sectional view of a food processor according to an embodiment of the present application.
FIG. 2 is a schematic diagram of an exploded structure of a structure in FIG. 1.
FIG. 3 is a schematic diagram of a part of the structure in FIG. 1.
FIG. 4 is a schematic diagram of an exploded structure of the part of the structure in FIG. 1.
FIG. 5 is a schematic structural diagram of a slurry valve device in a food processor in FIG. 1.
FIG. 6 is a schematic diagram of an exploded structure of the slurry valve device in FIG. 5.
FIG. 7 is a schematic cross-sectional view of the slurry valve device in FIG. 5 with the discharge pipe in a conducted state.
FIG. 8 is a schematic cross-sectional view of the slurry valve device in FIG. 5 with the discharge pipe in a closed state.
FIG. 9 is a schematic structural diagram of the slurry valve device in FIG. 7 after removing a discharge pipe assembly.
FIG. 10 is a top view of the structure in FIG. 9 removing a drive motor, with the discharge pipe in the closed state.
FIG. 11 is a schematic diagram of a top view of the structure in FIG. 9 removing the drive motor with the discharge pipe in the conducted state.
FIG. 12 is a schematic cross-sectional view of a portion of the structure of the slurry valve device in FIG. 7.
FIG. 13 is a schematic diagram of the side structural view of the slurry valve device in FIG. 5.

### Description of reference signs:

| Reference sign | Name | Reference sign | Name |
|---|---|---|---|
| 9 | food processor | 32 | groove |
| 8 | machine | 33 | sealing protrusion |
| 801 | control panel | 40 | installation seat |
| 7 | drive piece | 41 | guide rail |
| 6 | water tank | 42 | compression piece |
| 5 | water pump assembly | 421 | pressing ramp |
| 4 | processing cup assembly | 43 | avoidance groove |
| 3 | cup body | 50 | extrusion mechanism |
| 301 | discharge port | 50a | drive assembly |
| 302 | interface pipe | 51 | drive motor |
| 2 | processing actuator | 52 | extrusion piece |
| 1 | slurry valve device | 521 | abutting part |
| 10 | valve seat | 53 | drive screw rod |
| 11 | installation groove | 54 | limiting piece |
| 12 | guide groove | 60 | lock structure |
| 13 | installation hole | 61 | lock assembly |
| 14 | stopper | 62 | button |
| 15 | guide hole | 621 | drive ramp |
| 10a | first seat body | 63 | latch |
| 10b | second seat body | 631 | guide ramp |
| 20 | discharge pipe assembly | 64 | reset piece |
| 30 | discharge pipe | C | buckle groove |
| 30a | first pipe section | 70 | position detection structure |
| 30b | second pipe section | 71 | detection element |
| 31 | joint part | 72 | sensing element |
| 311 | base tube | L1, L2 | central axis |
| 312 | sleeve | | |

The realization, functional features and advantages of the present application will be further described in conjunction with the embodiments and with reference to the accompanying drawings.

### DETAILED DESCRIPTION OF THE EMBODIMENTS

The technical solutions in the embodiments of the present disclosure will be clearly and completely described below with reference to the drawings in the embodiment of the present disclosure. Obviously, the described embodiments are only a part of the embodiments of the present disclosure, not all of the embodiments. Based on the embodiments in the present disclosure, all other embodiments perceived by those skilled in the art without creative effort should be fallen within the protection scope of the present disclosure.

It should be noted that all of the directional instructions in the embodiments of the present disclosure (such as, up, down, left, right, front, rear....) are only used to explain the relative position relationship and movement of each component under a specific attitude (as shown in the drawings), if the specific attitude changes, the directional instructions will change correspondingly.

Besides, the descriptions in the present disclosure that refer to "first," "second," etc. are only for descriptive purposes and are not to be interpreted as indicating or implying relative importance or to implicitly indicate the number of technical features indicated. Thus, a feature defined as "first" or "second" may explicitly or implicitly comprise at least one of the features. Additionally, the term "and/or" used throughout the specification encompasses three scenarios. Taking A and/or B as an example, it comprises the technical solution of A, the technical solution of B, and the technical solution where both A and B are satisfied simultaneously. Furthermore, the technical solutions of the various embodiments can be combined with each other, but such combinations must be based on the ability of those skilled in the art to implement them. If the combination of technical solutions results in contradictions or is unfeasible, it should be considered that such a combination does not exist and is not within the scope of protection claimed by the present application.

The present application provides a food processor 9.

The food processor 9 can perform operations such as whipping, grinding, mixing, and boiling on the ingredients. In actual use, the food processor 9 can be, for example, a juicer or a juice extractor on the market, which can be used to squeeze fruits and vegetables to obtain fruit and vegetable juice. It can also be, for example, a high-speed blender or a soymilk machine. It can whip and grind the ingredients at high speed, and can further boil the crushed ingredients to make cooked food and drinks. That is, the food processor 9 provided in the present application may be provided with or without a heating function.

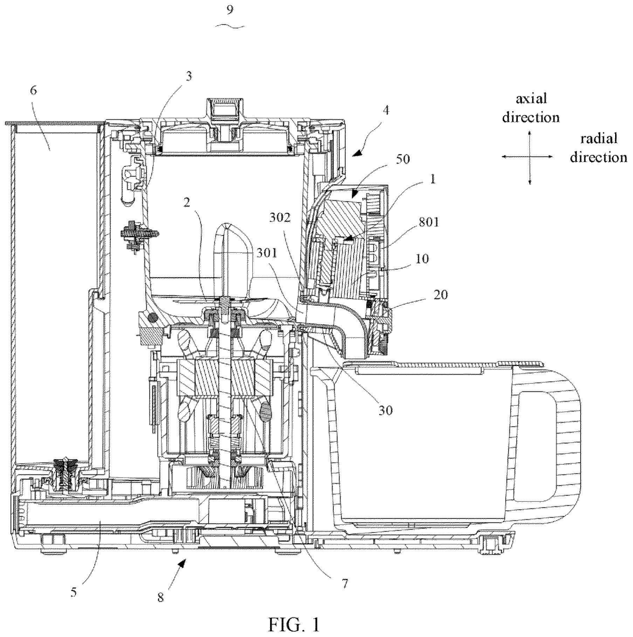

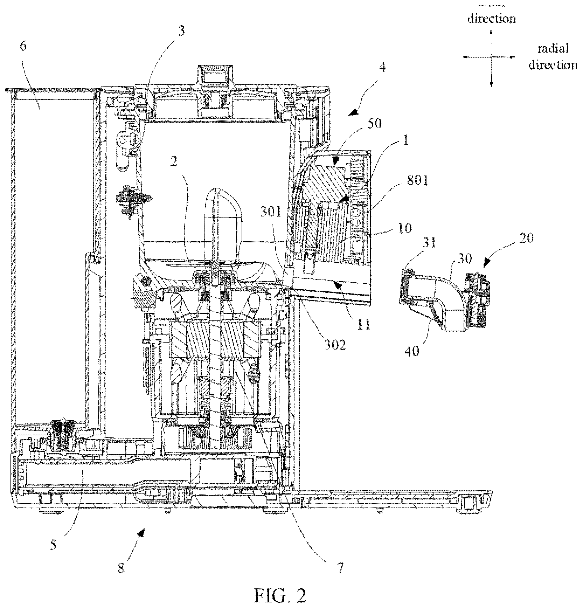

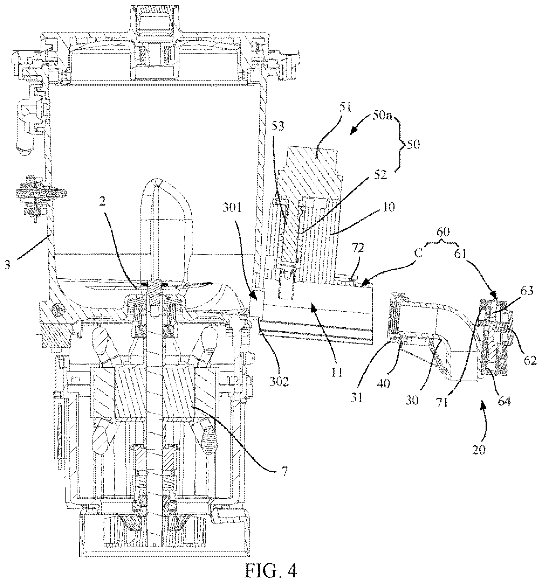

As shown in FIGS. 1 to 4, in the embodiment of the present application, the food processor 9 comprises a machine 8, a processing cup assembly 4, and a water tank 6. In some scenarios, the food processor 9 is further provided with a slurry receiving cup. The machine 8 comprises a housing and a drive piece 7 installed in the housing. The drive piece 7 is a rotation motor. The water tank 6 is installed in the housing. A water pump assembly 5 is further provided in the housing of the machine 8. In an embodiment, the water tank 6 can be detachably connected to the housing. The detachable connection between the water tank 6 and the housing can be, but not limited to, snap-on, plug-in, etc. In the technical solution shown in FIGS. 1 and 2, a placement table is formed on the housing of the food processor 9. The water tank 6 is placed on the placement table. At the same time, a hook and a groove structure are provided between the housing and the water tank 6. After the water tank 6 is placed on the placement table, the hook is inserted into the groove to relatively fix the water tank 6 and the machine 8. The water pump assembly 5 comprises a water pump and a water inlet pipe and a water outlet pipe connected to the water pump. A joint is provided on the water pipe inlet. The joint is fixed on the placement table. At the same time, an interface is provided on the water tank 6. After the water tank 6 is placed on the placement table, the joint and the interface are connected and communicated. The processing cup assembly 4 comprises a cup body 3, a processing actuator 2 and a slurry valve device 1. The end of the above-mentioned water outlet pipe is connected to a nozzle. The nozzle is used to spray the liquid required for food processing or automatic cleaning into the cup body 3. The processing cup assembly 4 can be removed by the machine 8, or the processing cup assembly 4 can be fixed on the machine 8. In an embodiment, the processing cup assembly 4 can be provided on the upper part of the machine 8. The processing actuator 2 is installed at the bottom of the cup body 3. The rotation motor in the machine 8 is coupled with the rotating shaft of the processing actuator 2 below the processing cup assembly 4. Then the processing actuator 2 is driven to rotate in the cup body 3 to process the food. In an embodiment, the rotation motor of the machine 8 can also be coupled with the rotating shaft of the processing actuator 2 at the upper part of the cup body 3. Then the processing actuator 2 extends from the upper part of the cup body 3 into the cup body 3 to drive the processing actuator 2 to rotate to process the food. The processing actuator 2 can be a stirring knife. The food processor 9 can be a high-speed blender or a soymilk machine. The ingredients in the cup body 3 are fully whipped by a stirring blade to obtain delicate ingredients. The processing actuator 2 can further be a stirring rod. The stirring rod is used to whip and mix the ingredients and liquid in the cup body 3. Thus, fluid ingredients are obtained, or functions such as kneading noodles are performed. The processing actuator 2 can further be a grinder. The grinder can grind and crush the ingredients in the cup body 3 to obtain slurry. Furthermore, when the food processor 9 also has a heating function, the heating element can be installed at the bottom of the cup body 3, and can also be installed on the side of the cup body 3. The heating element can be, but is not limited to, a heating tube, a heating wire, a heating film or an electromagnetic coil.

In the food processor 9 of the present application, the slurry valve device 1 can be provided on the processing cup assembly 4. After the fluid food is prepared, the slurry valve device 1 can be used to conveniently discharge the fluid food from the cup body 3, to the slurry receiving cup matched with the food processor 9 or the receiving container placed under the slurry valve device 1 by the user. That is, the food processor 9 of the present application can achieve the advantages of a high degree of automation and more convenient use when making drinks through the above structural design.

Normally, after the food processor 9 has been used for a long time, it is easy for more and more fluid ingredients to be retained in the slurry valve device 1 due to incomplete cleaning. As time goes by, the fluid ingredients retained in the slurry valve device 1 are prone to spoilage and mold. This leads to food safety risks in the subsequent food preparation process due to the spoiled and moldy dirt. Of course, during this process, the user will also try to clean the slurry valve device 1. However, the existing slurry valve device 1 has defects in its structural design, which also makes it impossible to clean it thoroughly. For this reason, the present application further provides a new slurry valve device 1. Through the slurry valve device 1, the food processor 9 also has the advantages of being easy to clean and not easy to hide dirt after long-term use.

As shown in FIGS. 1 to 4. The food processor 9 is provided with a discharge port 301 on the cup body 3. The cup body 3 is further connected to an interface pipe 302 that is communicated with the discharge port 301. The interface pipe 302 can be an integral structure with the cup body 3. For example, it can be formed by integral casting. Or the interface pipe 302 and the cup body 3 can also be separate structures. For example, the interface pipe 302 and the cup body 3 are fixedly connected to the cup body 3 by welding or other manners such as clamping and threaded connection. The slurry valve device 1 of the present application is installed on the cup body 3. In an embodiment, the slurry valve device 1 comprises a valve seat 10, a discharge pipe assembly 20 and an extrusion mechanism 50. The valve seat 10 is used to install the slurry valve device 1 to the cup body 3. The discharge pipe assembly 20 comprises an installation seat 40 and a discharge pipe 30 mounted on the installation seat 40. In an embodiment, the discharge pipe assembly 20 is movably connected to the valve seat 10 through the installation seat 40 and can be pulled out from the valve seat 10. The extrusion mechanism 50 is provided on the valve seat 10. The extrusion mechanism 50 acts on the outside of the discharge pipe 30 to switch the discharge pipe 30 between a conducted state or a force-closed state. Of course, the discharge pipe assembly 20 and the valve seat 10 can also be fixedly connected and cannot be disassembled without damaging the material for cleaning. The valve seat 10 and the cup body 3 are detachable, and thus the entire slurry valve device 1 can be disassembled for cleaning. In order to improve the convenience of cleaning, the present application adopts a solution in which the discharge pipe assembly 20 can be disassembled from the valve seat 10. The following content also further describes the solution in detail.

On the basis that the discharge pipe assembly 20 can be removed from the valve seat 10, and based on the docking manner, the technical solution of the present application is further designed in a manner in which the discharge pipe 30 is connected to the interface pipe 302 by sleeve connection. In this way, the technical solution of the present application forms an interface pipe 302 at the discharge port 301 of the cup body 3 in the processing cup assembly 4. The discharge pipe 30 in the slurry valve device 1 is sleeved and matched to the interface pipe 302 to achieve docking and connection of the two pipes. Thus, an effective radial seal can be formed between the interface pipe 302 and the discharge pipe 30. The sealing structure is relatively firm, which can effectively avoid leakage of fluid food from the docking connection during use, the sealing is good, and since the slurry valve device 1 and the cup body 3 are connected by two pipes, during use, as long as the axes of the two pipes are basically overlapped during the structural design process. Compared with the traditional formation of directly docking the discharge pipe 30 with the discharge port 301, the plug-in operation also has the advantage of easy operation.

In addition, the technical solution of the present application further provides the discharge pipe assembly 20 in the slurry valve device 1 to be movably connected to the valve seat 10, and the discharge pipe assembly 20 can be pulled out from the valve seat 10. During the long-term use of the food processor 9, when fluid food adheres to the flow channel of the slurry valve device 1, the discharge pipe assembly 20 can be removed to be cleaned separately, which makes cleaning convenient, lower the risk of mold and bacteria due to long-term retention of food, and thus the food safety performance is improved. In another embodiment, the extrusion mechanism 50 acts on the outside of the discharge pipe 30 to control the conducting and closing of the discharge pipe 30. Unlike the traditional valve structure, the valve core is extended into the discharge pipe 30 to control the conducting and closing of the pipe. Therefore, the situation where food residues are retained on the valve core is avoided. During the cleaning process, it is only necessary to rinse the discharge pipe 30., the cleaning is convenient, and it further improves the hygiene and safety of the food processor 9 during use.

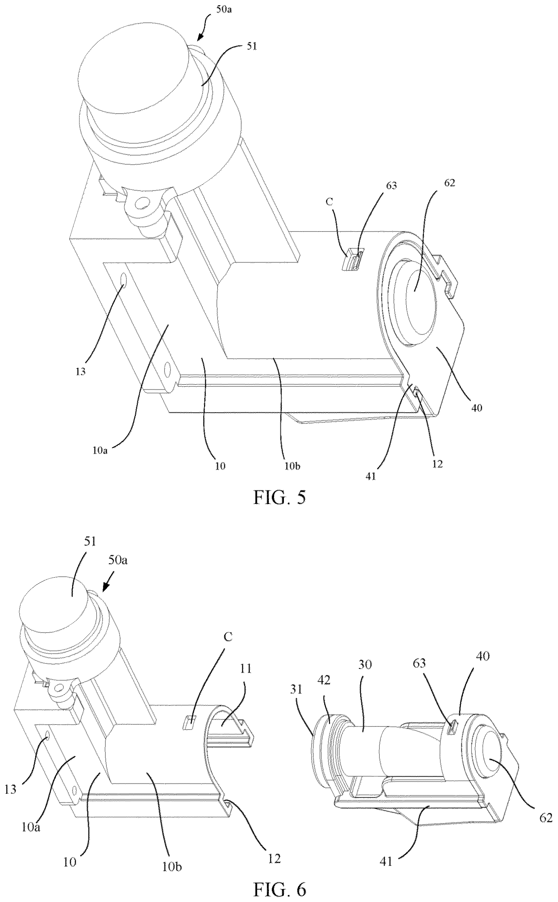

As shown in FIGS. 6 to 8. In an embodiment, the installation seat 40 is formed with a compression piece 42 of a cylindrical structure. The discharge pipe 30 comprises a joint part 31 that is sleeved with the interface pipe 302. The joint part 31 is sleeved on the compression piece 42. The discharge pipe 30 and the interface pipe 302 are connected and communicated. When the joint part 31 is sleeved on the interface pipe 302. The compression piece 42 cooperates with the interface pipe 302 in the radial direction to clamp at least part of the joint part 31. In an embodiment, the compression piece 42 is abutted against the outer wall surface of the joint part 31 to cooperate with the interface pipe 302 to radially clamp the outer wall and inner wall of the joint part 31 respectively to form a radial seal, and the sealing structure is more reliable.

Furthermore, a groove 32 is formed on the outside of the joint part 31. The end of the compression piece 42 is inserted into the groove 32. Specifically, the joint part 31 of this embodiment comprises a base tube 311 and a sleeve 312 connected to the outside of the base tube 311. The sleeve 312 is L-shaped. Since the base tube 311 and the sleeve 312 cooperate to form the groove 32, the end of the compression piece 42 is directly inserted into the groove 32, which makes the installation of the compression piece 42 more convenient.

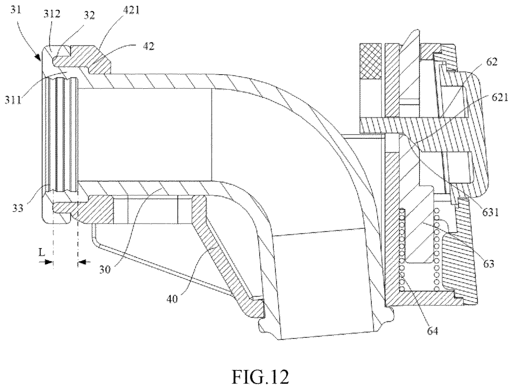

In order to further improve the sealing performance of the interface pipe 302 and the discharge pipe 30 after docking. The inner wall surface of the joint part 31 in contact with the interface pipe 302 of the present application is formed with a sealing protrusion 33. The sealing protrusion 33 is formed as a sealing ring structure surrounding the inner wall surface of the joint part 31. And there are multiple sealing rings provided at intervals in the axial direction of the joint part 31. After the joint part 31 is docked to the interface pipe 302, the annular sealing protrusion 33 produces elastic deformation to achieve effective sealing extrusion, which effectively avoids leakage at this point. In an embodiment, in the axial direction of the joint part 31. The length of the overlapping area between the compression piece 42 and the sealing protrusion 33 is not less than 0.5 mm. As shown in FIG. 12, the overlapping area between the compression piece 42 and the sealing protrusion 33 is defined as L, then the length of L is not less than 0.5 mm. As provided above, the embodiment can effectively avoid leakage at the connection between the interface pipe 302 and the discharge pipe 30.

It can be understood that in the above embodiments, the compression piece 42 is an integral structure with the installation seat 40. In other embodiments, the compression piece 42 and the installation seat 40 can also be split structures. That is, the compression piece 42 is a separate part. The compression piece 42 is sleeved on the outside of the discharge pipe 30 to radially clamp the discharge pipe 30 to the interface pipe 302. When the compression piece 42 is separately provided, the installation manner of the above embodiment can also be adopted, and it can also produce the same beneficial effects, which will not be repeated here.

In an embodiment, as shown in FIG. 5 and FIG. 6. The valve seat 10 comprises a first seat body 10a and a second seat body 10b. The first seat body 10a and the second seat body 10b may be an integral structure. The first seat body 10a and the second seat body 10b may be formed by plastic injection molding or integral casting of alloy materials. The first seat body 10a is used to install and fix the slurry valve device 1 to the cup body 3. The second seat body 10b is used to install the discharge pipe assembly 20. Specifically, the installation holes 13 may be provided on opposite sides of the first seat body 10a. A connecting column is provided on the outside of the cup body 3. The first seat body 10a has screws or bolts or other connecting members passing through the installation holes 13 to lock the valve seat 10 as a whole to the outside of the cup body 3. It can be understood that, for the connection between the valve seat 10 and the cup body 3, in addition to the screw connection manner exemplified in the above content, it can also be a detachable connection manner such as snap connection, plug-in connection, etc., that can be disassembled with or without destroying the structure, which is not limited by the present application.

The extrusion mechanism 50 of the present application is installed on the first seat body 10a. In an embodiment, the extrusion mechanism 50 can act on the outside of the discharge pipe 30 in a clamping manner so that the discharge pipe 30 is compressed and deformed. Therefore, the internal channel of the discharge pipe 30 is closed. When the extrusion mechanism 50 cancels the clamping force, the discharge pipe 30 can be restored again according to its own elastic deformation recovery ability to connect the internal channel. In an embodiment, as shown in FIGS. 1 to 3 and FIGS. 7 and 8, the discharge pipe 30 comprises a first pipe section 30a and a second pipe section 30b communicated with each other. The first pipe section 30a is used to dock with the discharge port 301. The central axis L1 of the first pipe section 30a extends in the radial direction of the food processor 9. The central axis L2 of the second pipe section 30b extends downward in the axial direction of the food processor 9. And the central axis L2 of the second pipe section 30b and the central axis L1 of the first pipe section 30a are provided at an angle. It should be pointed out here that. The radial and axial directions of the food processor defined in the present application can be based on the reference of the cup body 3. That is, the cup body 3 is generally a rotation body structure. Then the radial direction of the cup body 3 is defined as the radial direction of the food processor 9. And the axial direction of the cup body 3 is defined as the axial direction of the food processor 9. And the central axis in the above content extends in the radial or axial direction of the food processor 9. It should be understood that the central axis extends in the radial direction of the food processor 9 or in the range where the angle with the radial direction is less than or equal to 45 degrees. The understanding of the axial direction is same to the above understanding, which will not be repeated here, that is, it should be understood as a concept of orientation.

In an embodiment, the discharge pipe 30 is used to be divided into two sections. So that the central axis L2 of the second pipe section 30b extends obliquely downward. In the process of discharging slurry, it is beneficial to receive the slurry through the container and is more convenient to use. In an embodiment, the first pipe section 30a and the second pipe section 30b in the discharge pipe 30 can be made of elastic materials with deformation ability such as silicone and rubber. They are all elastic tubes and are used as an integrated structure, which is more convenient to manufacture and simple to assemble. It can also be used that the first pipe section 30a is an elastic tube and the second pipe section 30b is a rigid tube. For example, the second pipe section 30a is made of stainless steel, aluminum alloy, or glass. The first pipe section 30a and the second pipe section 30b can be fixedly connected by bonding or nesting. In this way, the second pipe 30b has a higher structural strength, which is beneficial to the export of heated food.

In an embodiment, the extrusion mechanism 50 may comprise a drive assembly 50a mounted on the first seat body 10a and an extrusion piece 52 driven by the drive assembly 50a. In an embodiment, the drive assembly 50a comprises a drive source 51. The drive source 51 may be a motor, an electromagnet, a cylinder or the like. The extrusion piece 52 abuts against the outside of the discharge pipe 30. The discharge pipe 30 is extruded under the drive of the drive source 51. The discharge pipe 30 is then turned conducting and closing. The extrusion piece 52 moves linearly under the drive of the drive source 51 to approach and act on the outside of the first pipe section 30a or the outside of the second pipe section 30b so that the discharge pipe 30 is closed or away from the discharge pipe 30 to conduct the discharge pipe 30. In an embodiment, the drive assembly 50a comprises a drive motor 51 and a drive screw rod 53. That is, the drive source 51 is a motor. The drive motor 51 is fixedly connected to the valve seat 10. The drive screw rod 53 is fixedly connected to the motor shaft of the drive motor 51. The extrusion piece 52 is formed with a thread groove. The drive screw rod 53 extends into the thread groove and is threadedly engaged. The valve seat 10 is formed with a guide hole 15 extending to the discharge pipe assembly 20. Under the drive of the drive screw rod 53, the extrusion piece 52 slides linearly along the guide hole 15.

In an embodiment, the angle formed by the central axis L1 of the first pipe section 30a and the radial direction of the food processor 9 is less than or equal to 45 degrees. The angle between the motion axis of the extrusion piece 52 and the central axis L1 of the first pipe section 30a ranges from 10 degrees to 90 degrees. In the case where the angle between the motion axis of the extrusion piece 52 of the present application and the central axis L1 of the first pipe section 30a is 10 degrees, it can be ensured that the extrusion mechanism 50 drives the extrusion piece 52 to move linearly and squeeze the discharge pipe 30 to realize the effective conducting and closing control process. When the motion axis of the extrusion piece 52 and the central axis of the first pipe section 30a are 90 degrees, that is, in a vertical state, the entire extrusion mechanism 50 can maintain a state relatively close to the cup body 3 after the valve seat 10 is installed on the cup body 3. This is conducive to the smaller lateral volume of the entire food processor 9 or the processing cup assembly 4. Thus, the structure is more compact. In an embodiment, considering the above content, it is effective when the conducting and closing of the discharge pipe 30 is controlled by external action, and the overall structure is compact. The present application can select the angle range between the movement axis of the extrusion piece 52 and the central axis L1 of the first pipe segment 30a to be provided to 30 degrees to 90 degrees. In an embodiment, the angle range between the movement axis of the extrusion piece 52 and the central axis L1 of the first pipe segment 30a can be selected to be provided to 60 degrees to 90 degrees. As shown in FIGS. 1 and 2. The food processing machine 9 of the present application also comprises a control panel 801. The control panel 801 signal is connected to the main control panel of the food processing machine 9. The control panel 801 is assembled on the outside of the cup body 3 of the processing cup assembly 4. The present application is provided up through the above solution. Most of the structure of the slurry valve device 9 can be hidden behind the control panel 801, which makes the structure of the whole machine more compact.

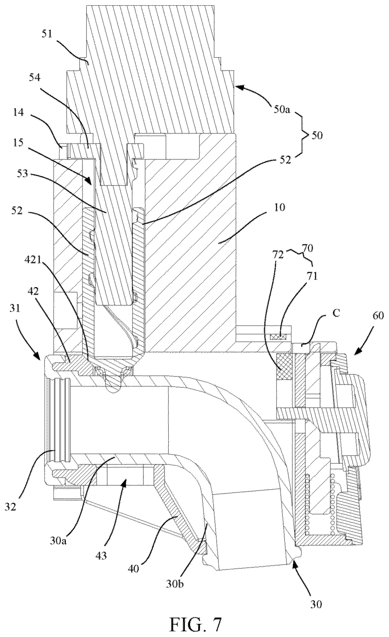

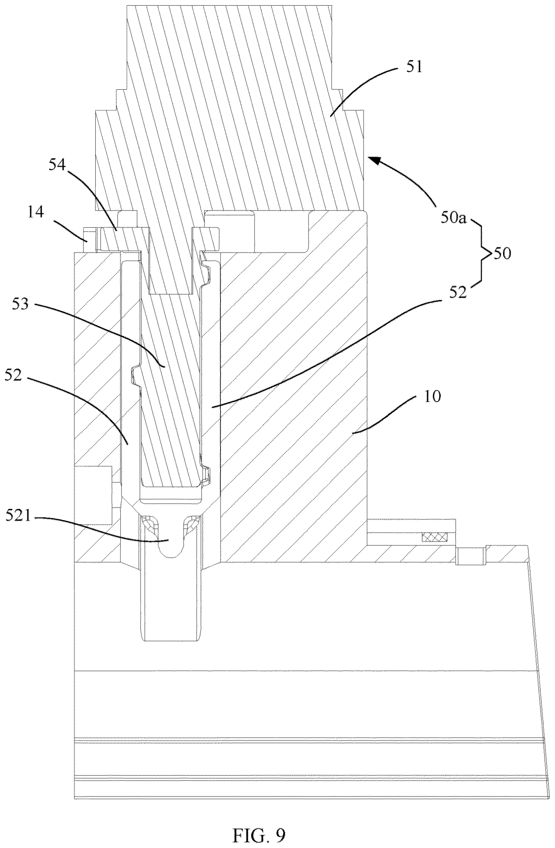

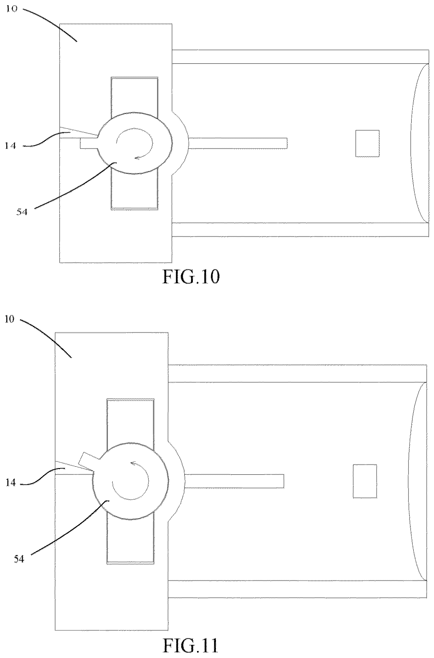

In order to allow the above-mentioned linear movement of the extrusion piece 52 to extrude the discharge pipe 30, the present application has made further improvements. Specifically, as shown in FIGS. 7 to 11. A limiting piece 54 is also fixed on the motor shaft of the drive motor 51. A stopper 14 is formed on the valve seat 10, specifically on the first seat body 10a. When the extrusion piece 52 moves to the position of closing the discharge pipe 30, the limiting piece 54 is blocked by one side of the stopper 14. When the extrusion piece 52 moves to the position that makes the discharge pipe 30 conductive, the limiting piece 54 is blocked by the other side of the stopper 14. Through the above settings, the stroke control of the extrusion piece 52 is more reliable and more accurate, and intersecting with the existing form of setting a position detection switch, the solution of the present application is obviously less expensive.

Furthermore, when the driving source 51 drives the extrusion piece 52 to perform linear motion, the present application further forms a pressing ramp 421 on the compression piece 42. When the extrusion piece 52 squeezes the discharge pipe 30 to close the discharge pipe 30, the extrusion piece 52 contacts the pressing ramp 421 and drives the joint part 31 to move toward the interface pipe 302. Through the above arrangement, during use, even if the discharge pipe 30 and the interface pipe 302 are not particularly tight after docking, the present application can also drive the extrusion piece 52 to make the discharge pipe 30 further move and press it against the interface pipe 302. In this way, the sealing performance is further improved.

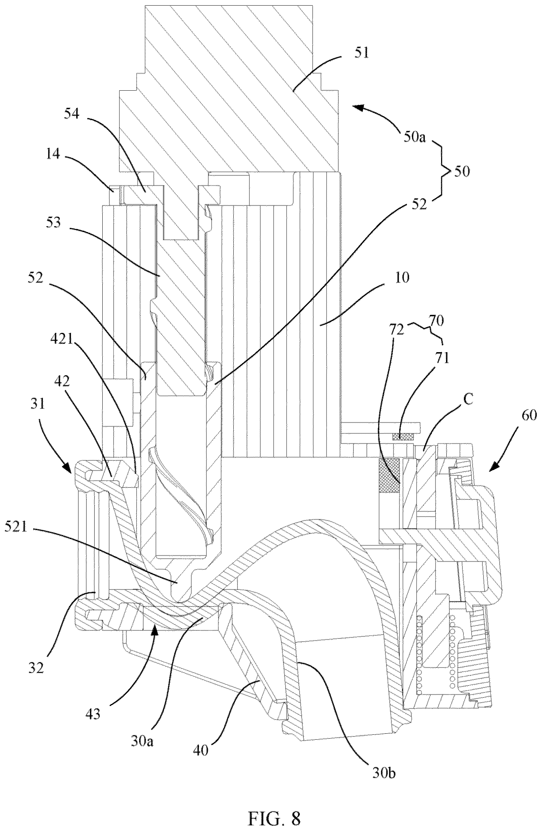

In an embodiment, as shown in FIGS. 7 and 8, the present application also forms an abutting part 521 at the end of the extrusion piece 52. The abutting part 521 has a circular extrusion surface. The installation seat 40 is also formed with an avoidance groove 43. During use, as shown in FIG. 8, when the extrusion piece 52 moves toward the discharge pipe 30 under the drive of the driving source 51, the abutting part 521 will eventually insert part of the wall of the discharge pipe 30 into the avoidance groove 43. The discharge pipe 30 is formed in a V shape at the position corresponding to the avoidance groove 43. The discharge pipe 30 is effectively clamped and closed by the cooperation of the groove wall of the avoidance groove 43 and the abutting part 521. It is ensured that no leakage occurs in the closed state.

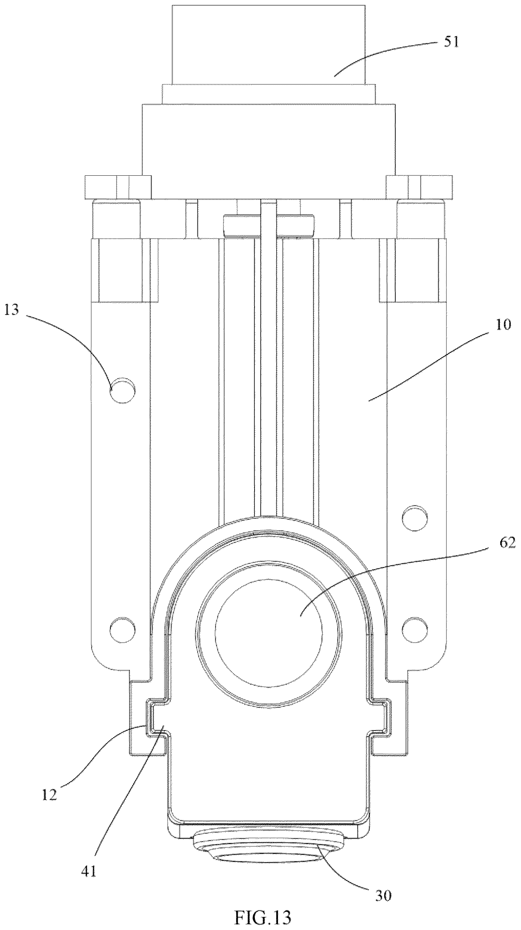

In an embodiment, for the specific implementation form in which the discharge pipe assembly 20 can be pulled out of the valve seat 10, as shown in FIGS. 2, 6 and 13. In an embodiment, the valve seat 10 is formed with an installation groove 11 on the second seat body 10b. The installation seat 40 is slidably inserted into the installation groove 11. In an embodiment, the installation seat 40 is a frame structure. The cross-sectional opening shape of the installation groove 11 is adapted to the outer contour shape of the installation seat 40. That is, in an embodiment, the installation seat 40 is accommodated and limited by forming the installation groove 11. The installation seat 40 is pulled in and out of the valve seat 10 by sliding along the installation groove 11. When disassembling and cleaning, the operation is convenient. In an embodiment, the installation groove 11 has an avoidance port formed at the bottom of the second seat body 10b and an insertion port opened on the side of the second seat body 10b. The installation seat 40 is inserted into the installation groove 11 from one side of the second seat body 10b from the insertion port. The second pipe section 30b in the discharge pipe 30 can extend downward from the avoidance port. In an embodiment, the installation groove 11 has three-side openings. The insertion ports on the opposite sides of the second seat body 10b are connected to the discharge port 301. The installation seat 40 can be directly connected to the discharge port 301 after being inserted from the insertion port on the other side. And since the discharge pipe 30 can extend from the avoidance port, there will be no interference with the discharge pipe 30 during the pulling process of the discharge pipe assembly 20. And the second pipe section 30b in the discharge pipe 30 can be designed to be tilted downward as described above, which makes the discharge process more convenient.

In an embodiment, the installation seat 40 and the valve seat 10 are connected in a sliding manner. In addition to the above-mentioned solution that the installation seat 40 slides along the installation groove 11, a matching form in which a guide rod and a sleeve are provided between the installation seat 40 and the valve seat 10. That is, a sleeve is provided on the installation seat 40. The valve seat 10 is provided with a guide rod extending toward the discharge port 301. The sleeve slides along the guide rod so that the discharge pipe assembly 20 can move toward the cup body 3 and the discharge pipe 30 can dock with the discharge port 301. In an embodiment, a roller and track structure can be provided between the installation seat 40 and the valve seat 10. The track can be provided on the valve seat 10. A roller is provided on the installation seat 40. The track extends toward the discharge port 301. The sliding of the roller along the track can also realize the docking process of the above-mentioned discharge pipe 30 and the discharge port 301.

Considering the stability of the connection structure and the manufacturing cost, the present application provides an installation groove 11 on the valve seat 10. The installation seat 40 is inserted into the installation groove 11 and slides along the installation groove 11 to dock the discharge port 301. On this basis, in order to further improve the accuracy of docking between the discharge pipe 30 and the discharge port 301, in an embodiment, a guide structure is formed between the groove wall of the installation groove 11 and the outer wall of the installation seat 40. In actual application, since the installation seat 40 drives the entire discharge pipe assembly 20 to be inserted from the installation groove 11 into the valve seat 10, for the convenience of operation, the notch of the installation groove 11 is generally slightly larger than the size of the outer contour of the entire discharge pipe assembly 20. Therefore, in an embodiment, through the setting of the guide structure, the posture of the installation seat 40 can be further controlled when it slides along the installation groove 11, which ensures that the discharge pipe 30 and the discharge port 301 are accurately docked, and it is not easy to leak during the slurry discharge due to inaccurate docking.

In an embodiment, the guide structure comprises a guide rail 41 and a guide groove 12 formed between the groove wall of the installation groove 11 and the outer wall of the installation seat 40. The guide rail 41 is inserted into the guide groove 12. In this embodiment, the guide groove 12 is formed on the two opposite groove walls of the installation groove 11. The guide rails 41 are protrudingly formed on the two opposite outer side walls of the installation seat 40, and the guide groove 12 extends toward the discharge port 301. The cross-sectional profile of the guide rail 41 and the guide groove 12 can be square, semicircular or dovetail. Therefore, during the sliding process of the installation seat 40 along the installation groove 11, the guide rail 41 and the guide groove 12 further limit the posture of the installation seat 40. It can be avoided that the installation seat 40 results in the deviation when the discharge pipe 30 docks with the discharge port 301 due to the assembly error between the installation groove 11. It can be understood that in other embodiments, the guide structure can also be a matching structure of the roller and the guide groove 12, or the matching structure of the positioning pin and the guide groove 12, which is not limited by the present application.

In order to achieve the more convenient cleaning, in the present application, the discharge pipe assembly 20 is designed to be pulled out from the valve seat 10 entirely. After the entire discharge pipe assembly 20 is pulled out from the valve seat 10 the discharge pipe 30 is further designed to be detachably connected to the installation seat 40. Specifically, in combination with the above content, the installation seat 40 is connected to a hollow structure with multiple opening structures. In this way, the discharge pipe 30 can be designed to be detachably connected to the installation seat 40 by being clamped and fixed. With such a design, after the discharge pipe assembly 20 is pulled out, it can be rinsed as a whole. At the same time, the discharge pipe 30 can be pulled out from the opening separately for separate cleaning. In this way, the cleaning can be more thorough and cleaner.

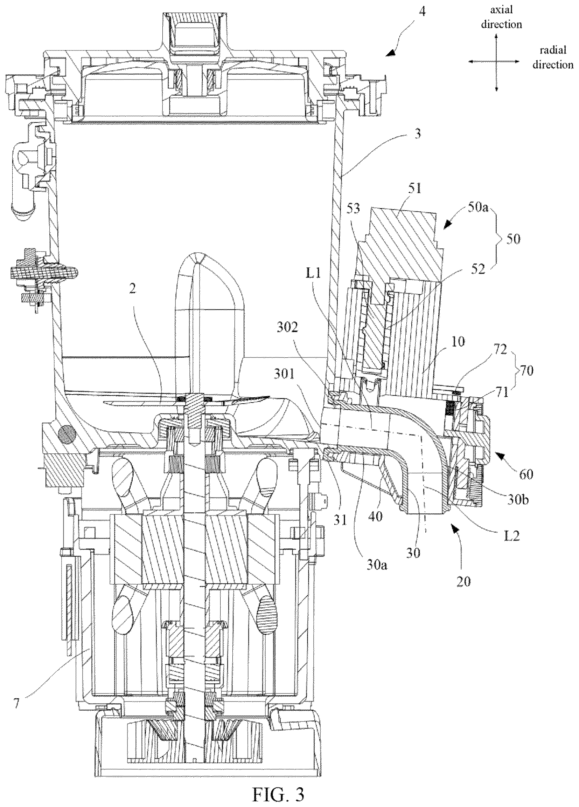

In an embodiment, as shown in FIG. 3, FIG. 4 and FIG. 7, after the discharge pipe assembly 20 is cleaned, the discharge pipe assembly 20 is reinstalled into the valve seat 10. In order to ensure that the discharge pipe assembly 20 is docked with the discharge port 301, the present application further provides a position detection structure 70 between the discharge pipe assembly 20 and the valve seat 10. In some configurations, the position detection structure 70 comprises a detection element 71 and a sensing element 72. The detection element 71 is mounted on the valve seat 10. The sensing element 72 is mounted on the installation seat 40. The structure formed by the detection element 71 and the sensing element 72 can be a Hall switch structure, a photoelectric switch structure, or a micro switch structure. For example, in the Hall switch structure, the detection element 71 is a Hall element provided on the valve seat 10. The sensing element 72 is a magnetic trigger element provided on the installation seat 40 and matched with the Hall element. And the Hall switch structure is provided after the discharge pipe assembly 20 is pushed into the valve seat 10. The discharge pipe 30 can just dock with the position of the discharge port 301. At the same time, after the discharge pipe assembly 20 is pushed into the valve seat 10 so that the discharge pipe assembly 20 and the discharge port 301 are docked, the pulp discharge operation can be performed. However, since the food processor 9 will have a certain vibration during operation, in order to prevent the discharge pipe assembly 20 from sliding out of the valve seat 10 or loosening from the discharge port 301 due to the vibration of the food processor 9, resulting in leakage of fluid food materials, the present application further provides a lock structure 60 between the valve seat 10 and the installation seat 40. In an embodiment, the lock structure 60 comprises a lock assembly 61 mounted on the installation seat 40 and a buckle groove C provided on the valve seat 10. The lock assembly 61 and the buckle groove C can be separated. During use, when the discharge pipe assembly 20 is pushed into the provided position in the installation groove 11, the position detection structure 70 generates a detection signal. The discharge pipe 30 is docked with the discharge port 301. At the same time, the lock assembly 61 is snapped into the buckle groove C. The discharge pipe 30 and the discharge port 301 are not easily loosened due to the vibration during the operation of the food processor 9. At the same time, the user can separate the lock assembly 61 from the buckle groove C by operating it, that is, the discharge pipe assembly 20 can be pulled out from the valve seat 10, which is convenient to use.

In an embodiment, the lock assembly 61 comprises a button 62, a latch 63 and a reset piece 64. The installation seat 40 is provided with an open mounting cavity. The latch 63 is movably provided in the mounting cavity. The latch 63 partially extends from the installation seat 40 to be plugged into the buckle groove C. The portion of the latch 63 located in the mounting cavity is provided with a drive ramp 621. The button 62 partially extends into the mounting cavity and is movably connected to the installation seat 40. The part of the button 62 extending into the mounting cavity is formed with a guide ramp 631 that is in sliding contact with the drive ramp 621. The reset piece 64 provides elastic force to drive the latch 63 partially to extend out of the installation seat 40. In an embodiment, the reset piece 64 is a spring. One end of the spring abuts against the inner wall surface of the mounting cavity. Another end abuts against the latch 63. The spring drives the latch 63 partially to extend out of the installation seat 40 in a natural state. In the process of pushing the discharge pipe assembly 20 into the installation groove 11. The latch 63 is squeezed by the groove wall of the installation groove 11 and will first retract into the installation cavity. When the latch 63 reaches the position of the buckle groove C, it moves to the outside of the installation seat 40 and then opens into the buckle groove C due to the elastic drive of the spring. In this way, the discharge pipe assembly 20 is firmly fixed on the valve seat 10. When the discharge pipe assembly 20 needs to be removed, the user presses the button 62, so that the guide ramp 631 on the button 62 squeezes the driving ramp 621 on the latch 63. Then the latch 63 is driven again to retract into the installation seat 40. Then, under the external pulling force of the user, the discharge pipe assembly 20 can be removed from the valve seat 10. In an embodiment, since the reset piece 64 provides elastic restoring force, the connection is firm and the assembly is easy to use.

It can be understood that in other embodiments of the lock structure 60, a magnetic connection can be provided between the valve seat 10 and the installation seat 40, or a structure in which the latch 63 is directly fixed to the socket, which is not limited in the present application.

The above are only some embodiments of the present application, and are not therefore limiting the scope of the present application. Any equivalent structure or equivalent process transformation made by using the contents of the specification and drawings of the present application, or directly or indirectly used in other related technical fields, is also comprised in the scope of the present application.

## Claims

1. A slurry valve device, applied to a food processor provided with a discharge port, **characterized by** comprising:
a valve seat, to install the slurry valve device on the food processor;
a discharge pipe assembly installed on the valve seat,
wherein the discharge pipe assembly comprises a discharge pipe, and the discharge pipe comprises a first pipe section and a second pipe section communicated with each other; and
the first pipe section is docked with the discharge port, a central axis of the first pipe section is extending in a radial direction of the food processor, a central axis of the second pipe section is extending downward in an axial direction of the food processor, and the central axis of the second pipe section is provided at an angle to the central axis of the first pipe section; and
an extrusion mechanism provided on the valve seat,
wherein the extrusion mechanism acts on an outside of the first pipe section or an outside of the second pipe section, controlling a conducting and closing of the discharge pipe.

2. The slurry valve device according to claim 1, wherein the extrusion mechanism comprises a drive assembly and an extrusion piece, the drive assembly drives the extrusion piece to perform a linear motion, to approach and act on the outside of the first pipe section to close the discharge pipe, or to move away from the first pipe section to conduct the discharge pipe.

3. The slurry valve device according to claim 2, wherein an angle formed by the central axis of the first pipe section and the radial direction of the food processor is less than or equal to 45 degrees, and an angle formed by a movement axis of the extrusion piece and the central axis of the first pipe section ranges from 10 degrees to 90 degrees.

4. The slurry valve device according to claim 2, wherein the drive assembly comprises a drive motor and a drive screw rod, the drive motor is fixedly connected to the valve seat, and the drive screw rod is fixedly connected to a motor shaft of the drive motor;
the extrusion piece is formed with a thread groove, the drive screw rod is extending into the thread groove and is threadedly engaged with the thread groove, the valve seat is formed with a guide hole extending to the discharge pipe assembly, and the extrusion piece is sliding linearly along the guide hole under a drive of the drive screw rod.

5. The slurry valve device according to claim 4, wherein a limiting piece is fixed on the motor shaft of the drive motor, a stopper is formed on the valve seat; when the extrusion piece moves to a position closing the discharge pipe, the limiting piece is blocked by one side of the stopper; and when the extrusion piece moves to a position conducting the discharge pipe, the limiting piece is blocked by another side of the stopper.

6. The slurry valve device according to claim 2, wherein the discharge pipe assembly comprises an installation seat, the discharge pipe is mounted on the installation seat, the installation seat is provided with an avoidance groove corresponding to the extrusion piece, and the extrusion piece and a groove wall of the avoidance groove are cooperated to clamp the discharge pipe.

7. The slurry valve device according to claim 6, wherein the valve seat is formed with an installation groove, and the installation seat is slidably inserted into the installation groove.

8. The slurry valve device according to claim 7, wherein a guide structure is formed between a groove wall of the installation groove and an outer wall of the installation seat.

9. The slurry valve device according to claim 6, wherein a lock structure is further provided between the valve seat and the installation seat.

10. The slurry valve device according to claim 6, wherein a position detection structure is further provided between the valve seat and the installation seat.

11. The slurry valve device according to claim 6, wherein the discharge pipe is detachably connected to the installation seat.

12. The slurry valve device according to claim 6, wherein the installation seat is formed with a compression piece in a cylindrical structure, the first pipe section comprises a joint part connected to the discharge port, and the joint part is sleeved on the compression piece;
the compression piece is further formed with a pressing ramp, and when the extrusion piece is squeezing the first pipe section to close the discharge pipe, and the extrusion piece is contacting the pressing ramp and driving the joint part to move toward the discharge port.

13. The slurry valve device according to claim 1, wherein the discharge pipe assembly comprises an installation seat, and the discharge pipe is mounted on the installation seat;
the valve seat is formed with an installation groove, the installation seat is slidably inserted into the installation groove, a guide structure is formed between a groove wall of the installation groove and an outer wall of the installation seat, and the guide structure comprising a guide rail and a guide groove formed between the groove wall of the installation groove and the outer wall of the installation seat, and the guide rail is inserted into the guide groove;
a lock structure is further provided between the valve seat and the installation seat;
a position detection structure is further provided between the valve seat and the installation seat;
the extrusion mechanism comprises a drive assembly and an extrusion piece, the drive assembly is driving the extrusion piece to perform a linear motion to approach and act on the outside of the first pipe section or the second pipe section to close the discharge pipe or to move away from the outside of the first pipe section or the second pipe section to conduct the discharge pipe; the drive assembly comprises a drive motor and a drive screw rod, the drive motor is fixedly connected to the valve seat, the drive screw rod is fixedly connected to a motor shaft of the drive motor, the extrusion piece is formed with a thread groove, the drive screw rod is extending into the thread groove and is threadedly engaged, the valve seat is formed with a guide hole extending to the discharge pipe assembly, and the extrusion piece is sliding linearly along the guide hole under a drive of the drive screw rod;
a limiting piece is further fixed on the motor shaft of the drive motor, a stopper is formed on the valve seat, when the extrusion piece moves to a position to close the discharge pipe, the limiting piece is blocked by one side of the stopper, and when the extrusion piece moving to the position to conduct the discharge pipe, the limiting piece is blocked by another side of the stopper;
the installation seat is provided with an avoidance groove corresponding to the extrusion piece, the extrusion piece and the groove wall of the avoidance groove are cooperated to clamp the discharge pipe; and
the installation seat is further provided with a compression piece in a cylindrical structure, the first pipe section comprises a joint part sleeved and matched with the compression piece, and the joint part is sleeved on the compression piece.

14. A processing cup assembly, **characterized by** comprising:
a cup body provided with a discharge port; and
a slurry valve device according to any one of claims 1 to 13,
wherein the slurry valve device is connected to the cup body, and a discharge pipe is connected to the discharge port.

15. The processing cup assembly according to claim 14, wherein an outer wall of the cup body is further connected to an interface pipe communicated with the discharge port, and the discharge pipe is communicated with the interface pipe in a sleeve manner.

16. A food processor, **characterized by** comprising:
a machine; and
a processing cup assembly mounted on the machine,
wherein the processing cup assembly is the processing cup assembly according to claim 14 or 15, a drive piece is provided on the machine, and the drive piece is in transmission connection with a processing actuator.
